(19)

Europäisches Patentamt

European Patent Office

Office européen des brevets

(11) EP 3 890 174 A1

## (12) EUROPEAN PATENT APPLICATION
published in accordance with Art. 153(4) EPC

(43) Date of publication:
06.10.2021 Bulletin 2021/40

(21) Application number: 20858070.4

(22) Date of filing: 30.06.2020

(51) Int Cl.:
H02M 1/32 (2007.01)

(86) International application number:
PCT/CN2020/099402

(87) International publication number:
WO 2021/036493 (04.03.2021 Gazette 2021/09)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 26.08.2019 CN 201910789028

(71) Applicants:
• NR ELECTRIC CO., LTD.
Jiangning
Nanjing,
Jiangsu 211102 (CN)
• NR Engineering Co., Ltd.
Nanjing, Jiangsu 211102 (CN)

(72) Inventors:
• ZHAN, Changjiang
Nanjing, Jiangsu (CN)

• WANG, Tao
Nanjing, Jiangsu (CN)
• YU, Xiaoyang
Nanjing, Jiangsu (CN)
• PAN, Lei
Nanjing, Jiangsu (CN)
• SHAO, Zhenxia
Nanjing, Jiangsu (CN)
• JIAO, Xinyan
Nanjing, Jiangsu (CN)
• LU, Yu
Nanjing, Jiangsu (CN)
• DONG, Yunlong
Nanjing, Jiangsu (CN)

(74) Representative: Kurig, Thomas
Becker & Kurig Partnerschaft
Patentanwälte PartmbB
Bavariastrasse 7
80336 München (DE)

(54) **CONVERTER APPARATUS AND ASSEMBLY, REACTIVE POWER COMPENSATION APPARATUS, AND CONVERTER THEREOF, AND CONTROL METHOD THEREFOR**

(57) A converter apparatus, an assembly of converter apparatuses, a reactive power compensation apparatus, a converter and a method for controlling the converter are disclosed. The converter apparatus (1000) comprises: a switch unit (U1), comprising a first controllable semiconductor device (Q1) and a second controllable semiconductor device (Q2) connected in series; a capacitor (C1) connected to the switch unit (U1) in parallel; and an energy-consuming voltage-equalizing unit (U2) connected with the capacitor (C1) in parallel, and comprising a first resistor (R1), a second resistor (R2) and a third controllable semiconductor device (Q3), wherein the first resistor (R1) and the second resistor (R2) are connected in series, and the third controllable semiconductor device (Q3) is connected with the first resistor (R1) in parallel.

FIG. 1

EP 3 890 174 A1

**Description**

Technical Field

This application relates to a high-voltage power converter, and in particular, to a converter apparatus capable of consuming fault energy, a reactive power compensation apparatus and a converter that consist of the converter apparatuses, and a method for controlling the converter.

Background

In the field of high-voltage direct-current power transmission where power converters are used to realize power transmission, when an alternating-current power grid at a power receiving end is in fault, energy is quickly accumulated at a direct-current polar line side due to the power imbalance between a power generating end and the power receiving end, which in turn leads to a sharp voltage rise, endangering the safety of facilities such as current-conversion valves and the system operation.

One of the most common solutions is to install a direct-current energy consumption apparatus, consisting of a semiconductor switch and an energy-consuming resistor connected in series, between direct-current polar lines of a converter. When a fault occurs, the semiconductor switch is turned on to convert unbalanced energy into thermal energy to be consumed, by means of the energy-consuming resistor. While the energy is consumed, this solution may not take the energy-consuming and voltage-equalizing requirements into consideration when a plurality of apparatuses are connected in series inside the converter.

In a solution that has been disclosed at present, the above-mentioned energy-consuming resistor, also called a braking resistor, is broken down into a plurality of single energy-consuming resistors, which are taken as components of sub-modules of the converter, and these sub-modules are connected in series with each other. The single energy-consuming resistors and the semiconductor switch form a series loop. When a fault occurs, the semiconductor switch is turned on to allow current to flow through the energy-consuming resistor; and in a normal state, the semiconductor switch interrupts current flowing through the single energy-consuming resistors. In this solution, one high-voltage semiconductor switch is connected with an energy-consuming resistor branch in parallel, which is only for the purpose of consuming the unbalanced energy when the alternating-current power grid is in fault. In view of the fact that the fault probability of the alternating-current power grid is extremely low, the high-voltage branch is in a standby state in most of the time and thus is extremely low in utilization rate.

Summary

An embodiment of the present application discloses a converter apparatus, comprising: a switch unit, comprising a first controllable semiconductor device and a second controllable semiconductor device connected in series; a capacitor connected with the switch unit in parallel; and an energy-consuming voltage-equalizing unit connected with the capacitor in parallel, and comprising a first resistor, a second resistor and a third controllable semiconductor device, wherein the first resistor and the second resistor are connected in series, and the third controllable semiconductor device is connected with the first resistor in parallel.

Optionally, the energy-consuming voltage-equalizing unit further comprises: a first switch connected with the first resistor in series, wherein the third controllable semiconductor device is connected with the first resistor and the first switch in parallel.

Optionally, the second controllable semiconductor device is a unipolar transistor; and the converter apparatus further comprises: two wiring terminals electrically connected to a source and a drain of the second controllable semiconductor device, respectively.

Optionally, the second controllable semiconductor device is a bipolar transistor; and the converter apparatus further comprises: two wiring terminals electrically connected to a collector and an emitter of the second controllable semiconductor device, respectively.

Optionally, the switch unit further comprises: a fourth controllable semiconductor device and a fifth controllable semiconductor device connected in series, wherein the first controllable semiconductor device and the second controllable semiconductor device are mutually connected with the fourth controllable semiconductor device and the fifth controllable semiconductor device in parallel.

Optionally, the converter apparatus further includes: two wiring terminals connected between the first controllable semiconductor device and the second controllable semiconductor device and between the fourth controllable semiconductor device and the fifth controllable semiconductor device, respectively.

Optionally, the converter apparatus further comprises: a second switch connected across the two wiring terminals.

Optionally, the converter apparatus further comprises: a free-wheel diode connected with the second resistor in anti-parallel.

Optionally, a resistance value of the first resistor is greater than a resistance value of the second resistor. An embodiment of the present application further provides an assembly of converter apparatuses, including at least two converter apparatuses described above, which are connected in series.

An embodiment of the present application further provides a reactive power compensation apparatus comprising the assembly of converter apparatuses described previously, which is electrically connected to a circuit to be compensated.

An embodiment of the present application further provides a converter, comprising the assembly of converter apparatuses described previously, both ends of which are at a direct-current side and electrically connected to both ends of a direct-current line respectively, wherein an alternating-current side is predetermined to be between two of the converter apparatuses in the assembly of converter apparatuses, and is electrically connected to an alternating-current line.

By means of any of the converter apparatus, the assembly of converter apparatuses consisting of the converter apparatuses, and the reactive power compensation apparatus and the converter that consist of the converter apparatuses as described above, the on and off of the third controllable semiconductor devices may be controlled such that the first and second resistors may take account of the voltage equalizing between the converter apparatuses in the event of energy consumption and series application. Therefore, the sizes of the converter apparatuses may be smaller. Meanwhile, since the converter is in a normal operating state in most of the time, that is, the converter apparatuses are in a voltage-equalizing state in most of the time, the utilization rate of devices is high by putting both the first and second resistors into use.

An embodiment of the present application further provides a method for controlling the converter described previously. The method comprises: acquiring a voltage at the direct-current side of the converter; determining whether the voltage at the direct-current side is greater than a preset first threshold; and controlling the third controllable semiconductor devices to be turned on in at least some of the converter apparatuses in the converter, based on a determining result.

An embodiment of the present application further provides a method for controlling the converter described previously. The method comprises: acquiring a voltage at both ends of the capacitor in each of the converter apparatuses; determining whether the voltage at both ends of the capacitor is greater than a preset sixth threshold; if so, controlling the third controllable semiconductor devices in the converter apparatuses to be turned on and the first and second controllable semiconductor devices in the converter apparatuses to be turned off; and if not, controlling the third controllable semiconductor devices in the converter apparatuses to be turned off.

An embodiment of the present application further provides a method for controlling the converter described previously. The method comprises: in response to a stop instruction from the converter, controlling the first and second controllable semiconductor devices in the converter apparatuses of the converter to be turned off and the third controllable semiconductor devices in the converter apparatuses of the converter to be turned on.

An embodiment of the present application further provides a method for controlling the converter described previously. The method comprises: controlling the first switch to be turned on; and in response to a charging complete signal from the capacitor, controlling the first switch to be turned off.

By means of any method described above, the on and off of the third controllable semiconductor devices in the converter apparatuses in the converter described previously may be controlled such that the first and second resistors may take account of the voltage equalizing between the modules in the event of energy consumption and series application. Therefore, the sizes of the converter apparatuses may be smaller. Meanwhile, since the converter is in a normal operating state in most of the time, that is, the converter apparatuses are in a voltage-equalizing state in most of the time, the utilization rate of devices is high by putting both the first and second resistors into use.

At the same time, by controlling any converter described previously by means of any one method described above, the devices in the converter can be effectively protected against damages, and the operating safety of the converter in a power grid can be protected.

Brief Description of the Drawings

FIG. 1 shows a schematic diagram of a circuit theory of a converter apparatus according to an embodiment of the present application.

FIG. 2 shows a schematic diagram of a circuit theory of a converter apparatus according to an embodiment of the present application.

FIG. 3 shows a schematic diagram of a circuit theory of a converter apparatus according to an embodiment of the present application.

FIG. 4 shows a schematic diagram of a circuit theory of an assembly of converter apparatuses according to an embodiment of the present application.

FIG. 5 shows a schematic diagram of a circuit theory of a reactive power compensation apparatus according to an embodiment of the present application.

FIG. 6 shows a schematic diagram of a circuit theory of a converter according to an embodiment of the present application.

FIG. 7A shows a schematic flowchart of a method for controlling any one of the converters described above according to an embodiment of the present application.

FIG. 7B shows a schematic flowchart of a method for controlling any one of the converters described above according to an embodiment of the present application.

FIG. 7C shows a schematic flowchart of a method for controlling any one of the converters described above according to an embodiment of the present application.

FIG. 7D shows a schematic flowchart of a method for controlling any one of the converters described above according to an embodiment of the present application.

FIG. 7E shows a schematic flowchart of a method for controlling any one of the converters described above according to an embodiment of the present application.

FIG. 7F shows a schematic flowchart of a method for controlling any one of the converters described above according to an embodiment of the present application.

FIG. 7G shows a schematic flowchart of a method for controlling any one of the converters described above according to an embodiment of the present application.

FIG. 7H shows a schematic flowchart of a method for controlling any one of the converters described above according to an embodiment of the present application.

FIG. 8 shows a schematic flowchart of a method for controlling any one of the converters described above according to an embodiment of the present application.

FIG. 9 shows a schematic flowchart of a method for controlling the converter apparatus shown in FIG. 2 or FIG. 3 according to an embodiment of the present application.

Detailed Description of Embodiments

The technical solutions in the embodiments of the present application will be clearly and completely described below with reference to the drawings in the embodiments of the present application. Obviously, the embodiments as described are some rather than all of the embodiments of the present disclosure. Based on the embodiments in the present application, all other embodiments obtained by those skilled in the art without creative efforts shall fall within the protection scope of the present application.

It should be understood that terms such as "first", "second", "third" and "fourth" in the claims, specification and accompanying drawings of the present application are intended to distinguish different objects, rather than to describe a specific order. Terms such as "comprise" and "include" used in the specification and claims of the present application indicate the existence of the described features, entities, steps, operations, elements and/or components, which does not exclude the existence or addition of one or more of other features, entities, steps, operations, elements, components and/or combinations thereof.

It should also be understood that the terms as used herein in the specification of the present application are merely for the purpose of describing a specific embodiment, instead of limiting the present application. As used in the specification and claims of the present application, the singular forms such "a/an", "one" and "the" are intended to include the plural forms, unless otherwise clearly specified in the context. It should also be further understood that the term "and/or" as used in the specification and claims of the present application refers to any combination and all the possible combinations of one or more of the items listed in association, includes these combinations.

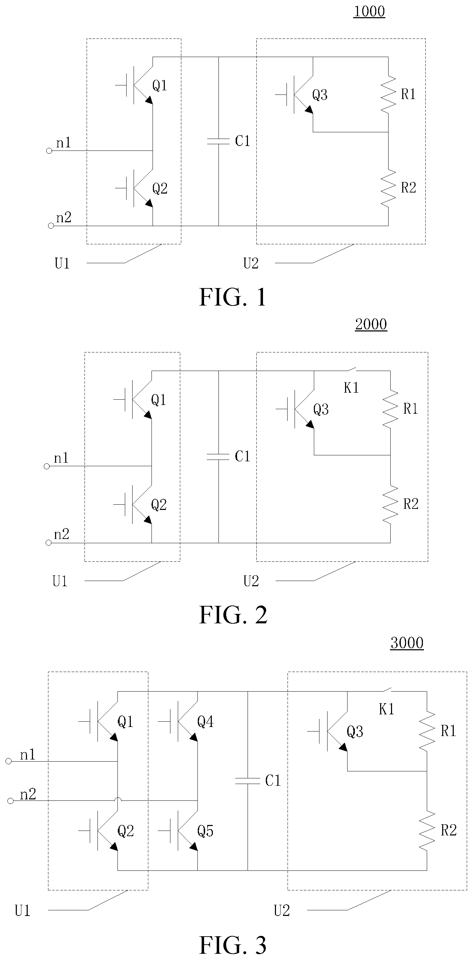

FIG. 1 shows a schematic diagram of a circuit theory of a converter apparatus 1000 according to an embodiment of the present application. As show in FIG. 1, the converter apparatus 1000 comprises: a capacitor C1, a switch unit U1 and an energy-consuming voltage-equalizing unit U2. Wherein:

The switch unit U1 comprises: a first controllable semiconductor device Q1 (for example, an insulating-gate bipolar transistor (IGBT)) and a second controllable semiconductor device Q2 (for example, an insulating-gate bipolar transistor (IGBT)) which are connected in series. That is, an emitter of Q1 is electrically connected to a collector of Q2 to form a topological structure similar to a half-bridge circuit.

The energy-consuming voltage-equalizing unit U2 comprises: a first resistor R1 and a second resistor R2 that are connected in series, and a third controllable semiconductor device Q3 (for example, an insulating-gate bipolar transistor (IGBT)). Q3 is connected with R1 in parallel, that is, an emitter and a collector of Q3 are electrically connected to both ends of R1, respectively.

As shown in FIG. 1, optionally, the capacitor C1 may be a single capacitor, or a capacitor array formed by connecting a plurality of capacitors in series/parallel.

As shown in FIG. 1, optionally, the insulating-gate bipolar transistor (IGBT) Q1 and the insulating-gate bipolar transistor (IGBT) Q2 have a connection relation where a collector of Q1 is connected to an emitter of Q2.

As shown in FIG. 1, Q1 and Q2 may also be other bipolar transistors.

As shown in FIG. 1, further, the converter apparatus 1000 may comprise two wiring terminals n1 and n2, which are electrically connected to the collector and emitter of Q2, respectively. Optionally, the wiring terminals n1 and n2 may also be electrically connected to the collector and emitter of Q1, respectively. Optionally, the wiring terminals n1 and n2 may also be electrically connected to the collector and emitter of Q2, respectively.

As shown in FIG. 1, optionally, Q1 and Q2 may also be unipolar transistors. Q1 is connected to Q2 in series, that is, a drain of Q1 is electrically connected to a source of Q2; or a source of Q1 is electrically connected to a drain of Q2.

Further, the converter apparatus 1000 may comprise two lead terminals n1 and n2, which are electrically connected to the drain and source of Q2, respectively. Optionally, the lead terminals n1 and n2 may also be electrically connected to the drain and source of Q1, respectively. Optionally, the lead terminals n1 and n2 may also be electrically connected to the drain and source of Q2, respectively.

As shown in FIG. 1, optionally, the converter apparatus 1000 may comprise a second switch K2 (not shown) connected across the lead terminals n1 and n2.

As shown in FIG. 1, Q1 and Q2 may also be local circuits formed by connecting at least two controllable semiconductor devices in series/parallel. Q1 and Q2 may also be other circuit modules having a quick switch function, such as intelligent power modules (IPMs).

As shown in FIG. 1, optionally, Q1 and Q2 are semiconductor devices of the same type with the same parameters.

As shown in FIG. 1, optionally, Q1 and Q2 are large-power semiconductor devices.

As shown in FIG. 1, R1 and R2 may be independent resistor elements, or resistor arrays formed by connecting a plurality of resistors in series/parallel, or other resistive local circuits.

As shown in FIG. 1, optionally, a resistance value of R1 is greater than that of R2.

As shown in FIG. 1, optionally, the converter apparatus 1000 may further comprise a free-wheel diode D1 (not shown), which is connected with the resistor R2 in anti-parallel and provides a free-wheel path when the insulating-gate bipolar transistor (IGBT) Q3 is turned off.

As shown in FIG. 1, when Q3 is turned on, the resistor R1 is shorted, and the voltage at both ends of the capacitor is directly applied to the resistor R2. Here, the energy-consuming voltage-equalizing unit U2 enters a low-impedance state, i.e., an energy-consuming state. The energy-consuming voltage-equalizing unit U2 in the energy-consuming state may be configured to, after a fault occurs, consume power stored in the capacitor C1 to reduce the voltage at both ends of the capacitor C1. Further, the power consumption efficiency may be improved by reasonably controlling Q1 and Q2 to match up with a power consumption process.

As shown in FIG. 1, when Q3 is turned off, the voltage at both ends of the capacitor is directly applied to the resistors R1 and R2 connected in series. Here, the energy-consuming voltage-equalizing unit U2 enters a high impedance state, i.e., a voltage-equalizing state. When a plurality of converter apparatuses 1000 are connected in series, the energy-consuming voltage-equalizing units U2 in the voltage-equalizing state may be configured to equalize the voltage at both ends of each of the converter apparatuses 1000.

By means of the converter apparatus 1000 described above, Q3 may be controlled to be turned on and off in such a way that the resistors R1 and R2 may take account of the voltage equalization of each of the converter apparatuses in the event of energy consumption and series application, thereby allowing the converter apparatus 1000 to be smaller in size. Meanwhile, the converter apparatus 1000 is in the voltage-equalizing state in most of the time; and the resistors R1 and R2 of the converter apparatus 1000 in the voltage-equalizing state are both put into use, therefore, the utilization rate of devices of the converter apparatuses 1000 is high.

FIG. 2 shows a schematic diagram of a circuit theory of a converter apparatus 2000 according to an embodiment of the present application. As show in FIG. 2, the converter apparatus 2000 comprises: a capacitor C1, a switch unit U1 and an energy-consuming voltage-equalizing unit U2.

The capacitor C1 and the switch unit U1 are identical to the devices of the same names in the converter apparatus 1000, which will not be repeated anymore here.

The energy-consuming voltage-equalizing unit U2 comprises: an insulating-gate bipolar transistor (IGBT) Q3, a first switch K1, and resistors R1 and R2 which are connected in series. The resistor R1, the resistor R2, and the insulating-gate bipolar transistor (IGBT) Q3 are identical to the devices of the same names in the converter apparatus 1000, which will not be repeated anymore here. The first switch K1 is connected with the resistor R1 in series.

Optionally, the first switch K1 may be any circuit device or circuit module having a switch function, such as, a relay, an air switch and a controllable semiconductor device.

When the converter apparatus 2000 is in a normal state, K1 may be controlled to control whether R1 and R2 are utilized for voltage equalization. For instance, K1 may be turned on during start-up, and R1 and R2 are utilized for voltage equalization; and after the start-up is completed, K1 is disconnected, and R1 and R2 are not utilized for voltage equalization anymore, thereby reducing the energy consumption caused by R1 and R2 when the converter apparatus 2000 operates normally.

In particular, the following steps may be performed during system start-up: K1 is controlled to be turned on, and R1 and R2 are utilized to perform voltage-equalizing control over a plurality of converter apparatuses 2000 connected in series; the voltage $U_{C1}$ at both ends of in the capacitor C1 in each of the converter apparatus 2000 is detected; whether $U_{C1}$ is greater than a preset threshold $U_{th7}$ is determined; and if so, K1 is disconnected to avoid energy consumption caused by R1 and R2.

By means of the converter apparatus described above, the requirements for energy consumption in a fault state, voltage equalization during start-up and the high-efficiency operation during normal operation may be taken account. Therefore, a circuit using the converter apparatus described above is more flexible to operate.

FIG. 3 shows a schematic diagram of a circuit theory of a converter apparatus 3000 according to an embodiment of the present application. As show in FIG. 3, the converter apparatus 3000 comprises: a capacitor C1, a switch unit U1 and an energy-consuming voltage-equalizing unit U2.

The energy-consuming voltage-equalizing unit U2 may comprise: resistors R1 and R2 connected in series, and an insulating-gate bipolar transistor (IGBT) Q3. Q3 is connected with R1 in parallel, that is, an emitter and a collector of Q3 are electrically connected to both ends of R1, respectively.

The capacitor C1, the resistors R1 and R2 and the insulating-gate bipolar transistor (IGBT) Q3 are identical to the devices of the same names in the converter apparatus 1000, which will not be repeated anymore here.

As shown in FIG. 3, the switch unit U1 comprises: insulating-gate bipolar transistors (IGBT) Q1 and Q2 connected in series, and insulating-gate bipolar transistors (IGBT) (a fourth controllable semiconductor device) Q4 and (a fifth controllable semiconductor device) Q5 connected in series, wherein the Q1 and Q2 that are connected in series are connected in parallel with Q4 and Q5 that are connected in series. Q1, Q2, Q4, and Q5 form a topological structure similar to a full-bridge circuit.

As shown in FIG. 3, optionally, Q1, Q2, Q4, and Q5 may be replaced with other bipolar transistors respectively. Q1, Q2, Q4, and Q5 may also be replaced with unipolar transistors respectively. Q1, Q2, Q4, and Q5 may also be local circuits or switch modules that are formed by at least two semiconductor devices, respectively.

As shown in FIG. 3, optionally, Q1, Q2, Q4, and Q5 may be the same type of semiconductor devices, and further, Q1, Q2, Q4, and Q5 have the same device parameters.

As shown in FIG. 3, optionally, the converter apparatus 3000 may comprise a switch K1 (not shown), which is connected with a resistor R1 in series. K1 in the converter apparatus 3000 is the same as K1 in the converter apparatus 2000, which will not be repeated in detail.

As shown in FIG. 3, optionally, the converter apparatus 3000 may comprise two wiring terminals n1 and n2. The wiring terminal n1 is electrically to a connecting point between Q1 and Q2, and the wiring terminal n2 is electrically to a connecting point between Q4 and Q5.

As shown in FIG. 3, optionally, the converter apparatus 3000 may comprise a switch K2 (not shown), which is connected across the wiring terminals n1 and n2.

By means of the converter apparatus 3000 described above, Q1, Q2, Q4, and Q5 may be controlled to generate three levels $U_{DC}$, 0 and $-U_{DC}$, thereby achieving a better system control effect; and next, by controlling Q1 and Q5 to be turned on and Q2 and Q4 to be turned on for controlling a system current to flow in or out of a direct-current capacitor, the voltage of the capacitor can be adjusted more quickly; and furthermore, when a limiting short-circuit occurs to a system, Q1, Q2, Q4, and Q5 may be locked out to limit a short-circuit current.

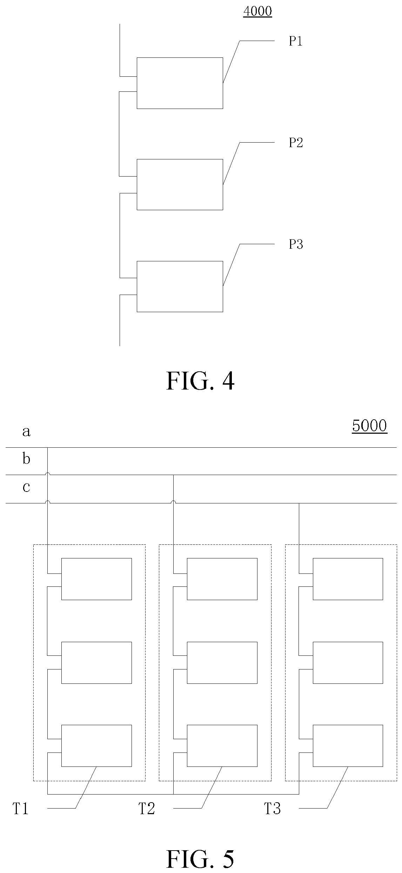

FIG. 4 shows a schematic diagram of a circuit theory of an assembly 4000 of converter apparatuses according to an embodiment of the present application. As shown in FIG. 4, the assembly 4000 of converter apparatuses comprises P1, P2 and P3 connected in series.

P1, P2 and P3 are any converter apparatus described previously.

As shown in FIG. 4, the assembly 4000 of converter apparatuses may comprise two converter apparatuses connected in series, and may further comprise more than three converter apparatuses connected in series.

As shown in FIG. 4, optionally, the assembly 4000 of converter apparatuses may further comprise a reactor (not shown) connected with the converter apparatuses in series.

Optionally, the assembly 4000 of converter apparatuses may further comprise at least two sets of converter apparatuses, which are connected in parallel. Each set of converter apparatuses comprises at least two converter apparatuses connected in series, wherein each converter apparatus is any one converter apparatus described previously. Further, each set of converter apparatuses are identical in the number of the converter apparatuses.

Optionally, the converter apparatuses comprised in the assembly 4000 of converter apparatuses are identical in both the circuit topological structure and the parameters of circuit elements.

FIG. 5 shows a schematic diagram of a circuit theory of a reactive power compensation apparatus 5000 according to an embodiment of the present application. As shown in FIG. 5, the reactive power compensation apparatus 5000 comprises: three assemblies T1, T2 and T3 of converter apparatuses of any one assembly of converter apparatuses as described previously, wherein T1, T2 and T3 are connected in a star shape and electrically connected to three phases a, b and c of a line to be compensated, respectively.

Optionally, T1, T2 and T3 may also be connected in a triangular fashion.

Optionally, the circuit to be compensated may also be a single-phase alternating-current circuit. Accordingly, the reactive power compensation apparatus 5000 only comprises one assembly of converter apparatuses, which is connected across two ends of the alternating-current line to be compensated.

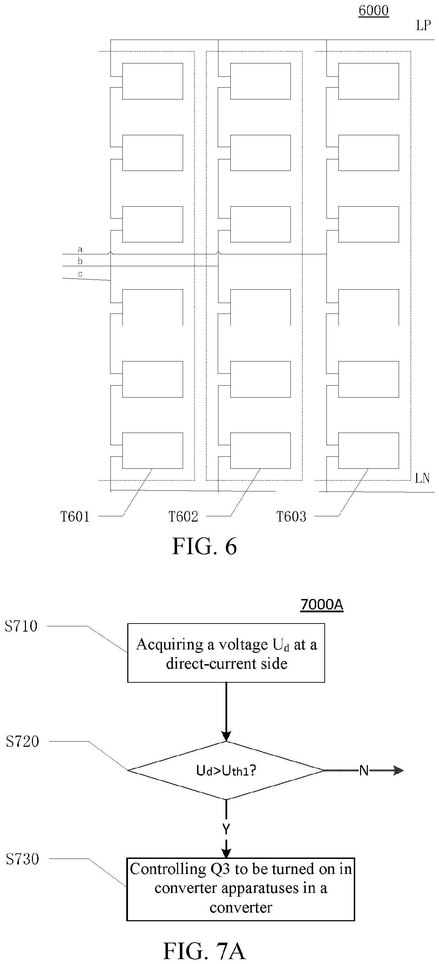

FIG. 6 shows a schematic diagram of a circuit theory of a converter 6000 according to an embodiment of the present application. As shown in FIG. 6, the converter 6000 comprises: three assemblies T601, T602 and T603 of converter apparatuses.

T601, T602 and T603 are any one assembly of converter apparatuses described previously. Both ends of each of T601, T602 and T603 are connected to LP and LN of a direct-current line, with LP being a positive end and LN being a negative end. Each of the assemblies T601, T602 and T603 of converter apparatuses is formed by connecting six converter apparatuses in series. A connecting point between third and fourth converter apparatuses in each of the assemblies T601, T602 and T603 of converter apparatuses is an alternating-current side, which is electrically connected to a corresponding one of three phases a, b and c of a three-phase alternating-current line, respectively.

As shown in FIG. 6, T601, T602 and T603 may be formed by connecting another number of converter apparatuses in series. The converter apparatuses comprised in each of the assemblies T601, T602 and T603 of converter apparatuses may also be different from one another in number.

As shown in FIG. 6, three-phase alternating-current sides may be disposed at connecting points between two converter apparatuses in the middles of T601, T602 and T603, respectively. The three-phase alternating-current sides may also be disposed at connecting points between another two predetermined converter apparatuses in T601, T602 and T603, respectively.

The converter 6000 may also include two assemblies of converter apparatuses, wherein both ends of each of the converter apparatuses are at a direct-current side and connected to both ends LP and LN of a direct-current line; and a connecting point of two predetermined converter apparatuses of each converter is at an alternating-current side and connected to both ends of a single-phase alternating-current power supply, respectively.

FIG. 7A shows a schematic flowchart of a method 7000A for controlling any one of the converters described above according to an embodiment of the present application. The method 7000A is used for handling a fault of any converter described previously. As shown in FIG. 7A, the method 7000A comprises: a step S710, a step S720 and a step S730.

In the step S710, a voltage $U_d$ is acquired at a direct-current side of a converter.

In the step S720, whether $U_d$ is greater than a preset first threshold $U_{th1}$ is determined.

In the step S730, if $U_d$ is greater than the preset first threshold $U_{th1}$, at least some of the converter apparatuses in the converter are controlled to enter an energy consumption state. That is, Q3 in each of the at least some of the converter apparatuses in the converter is controlled to be turned on.

As shown in FIG. 7A, the step S730 may be to control one of the converter apparatuses in the converter to enter the energy consumption state, or to control two or more converter apparatuses in the converter to enter the energy consumption state, or to control all the converter apparatuses in the converter to enter the energy consumption state.

Optionally, the method 7000A may further comprise a step S740 (not shown), in which in the converter apparatuses that have entered the energy consumption state, Q1 are controlled to be turned on, and Q2 are controlled to be turned off.

Optionally, the method 7000A may further comprise a step S750 (not shown), in which in all the converter apparatuses in the converter, Q1 and Q2 are controlled to be turned off.

As shown in FIG. 7A, the method 7000A may further comprise a step S760 (not shown), in which if $U_d$ is not greater than the preset first threshold $U_{th1}$, all the converter apparatuses in the converter are controlled to enter a voltage equalization state, Q3 in all the converter apparatuses are controlled to be turned off.

Further, the step S760 may further comprise: Q1 and Q2 in all the converter apparatuses are controlled to enter a normal operating state, such as a pulse-width control state.

Optionally, before the step S710, the method may further comprise: all the converter apparatuses are controlled to enter the voltage equalization state, that is, Q3 in all the converter apparatuses are controlled to be turned off.

The method 7000A is any method for protecting the converter as described previously, where the step S720 is to determine whether the converter is in a fault state; and the step S730 is to handle the fault.

When some faults (such as a circuit trip in a portion at a power consuming side) occur to a line, the output power of the power generating side is greater than the consumption power of the power consuming side, resulting in a voltage rise of a transmission line. In the event of the fault described above, the method 7000A may be used to consume an excessive capacity on the transmission line in a manner of putting energy-consuming resistors in use, thereby allowing the voltage of the transmission line to reach a normal range.

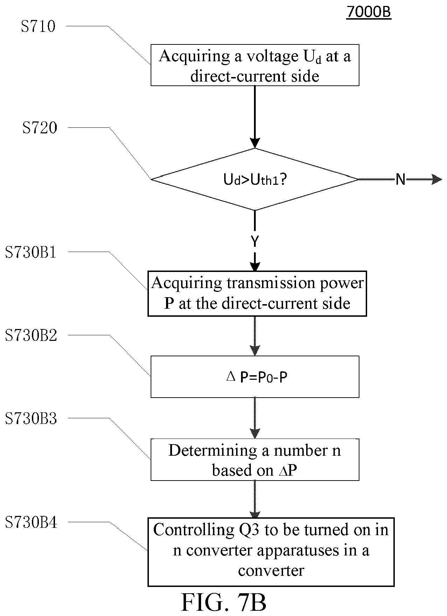

FIG. 7B shows a schematic flowchart of a method 7000B for controlling any one of the converters described previously according to an embodiment of the present application. As shown in FIG. 7B, the method 7000B is obtained by substituting the step S730 with steps S730B1, S730B2, S730B3 and S730B4 based on the method 7000A.

In the step S730B1, transmission power P is acquired at the direct-current side of the converter.

In the step S730B2, a difference $\Delta P$ by which a preset transmission power value $P_0$ of the converter exceeds the transmission power P at the direct-current side of the converter is calculated.

In the step S730B3, a number n of the converter apparatuses, that need to consume energy, in the converter is calculated based on $\Delta P$.

In step S730B4, n converter apparatuses in the converter are controlled to enter the energy consumption state. That is, the third controllable semiconductor devices Q3 in the n converter apparatuses in the converter are controlled to be turned on.

As shown in FIG. 7B, the step S730B1 therein may comprise the following steps.

A current $I_d$ is acquired at the direct-current side of the converter.

The transmission power P at the direct-current side of the converter is calculated based on the voltage $U_d$ at the direct-current side and the current $I_d$ at the direct-current side of the converter.

As shown in FIG. 7B, the preset transmission power value $P_0$ in the step S730B2 may be a steady-state value of the transmission power at the direct-current side, before the voltage $U_d$ at the direct-current side of the converter exceeds the first threshold $U_{th1}$.

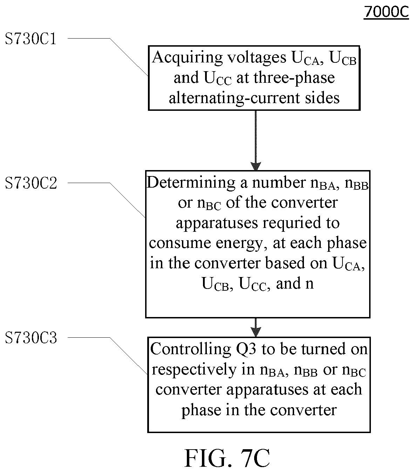

FIG. 7C shows a schematic flowchart of a method 7000C for controlling any one of the converters described previously according to an embodiment of the present application. As shown in FIG. 7C, the method 7000C is obtained by substituting the step S730 B4 with steps S730C1, S730C2 and S730C3 based on the method 7000B.

In step S730C1, voltages $U_{CA}$, $U_{CB}$, and $U_{CC}$ are acquired at the three-phase alternating-current sides of the converter.

In the step S730C2, the numbers $n_{BA}$, $n_{BB}$ and $n_{BC}$ of converter apparatuses, that need to consume energy, at each phase in the converter are determined based on $U_{CA}$, $U_{CB}$, $U_{CC}$ and the number n of the converter apparatusesrequired to consume energy, in the step S730B3 of the method 7000B, wherein a sum of $n_{BA}$, $n_{BB}$ and $n_{BC}$ is equal to n.

In the step S730C3, Q3 in each of the $n_{BA}$, $n_{BB}$ and $n_{BC}$ converter apparatuses at each phase in the converter is controlled to be turned on, respectively.

Wherein, the voltages $U_{CA}$, $U_{CB}$ and $U_{CC}$ at the three-phase alternating-current sides may be a mean value or a valid value of the voltages at the three phases of alternating-current sides. The voltages $U_{CA}$, $U_{CB}$ and $U_{CC}$ at the three-phase alternating-current sides may be phase voltages or linear voltages.

As shown in FIG. 7C, further, $n_{BA}$ is negatively correlated with $U_{CA}$, $n_{BB}$ is negatively correlated with $U_{CB}$, and $n_{BC}$ is negatively correlated with $U_{CC}$. Furthermore, the step S730C2 may be calculating the numbers $n_{BA}$, $n_{BB}$ and $n_{BC}$ of the converter apparatusesrequired to consume energy, at each phase according to Formulas (1), (2) and (3).

$$n_{BA} = n * (U_{CB} + U_{CC}) / [2(U_{CA} + U_{CB} + U_{CC})] \qquad (1)$$

$$n_{BB} = n * (U_{CA} + U_{CC}) / [2(U_{CA} + U_{CB} + U_{CC})] \qquad (2)$$

$$nBC = n - n_{BA} - n_{BB} \qquad (3)$$

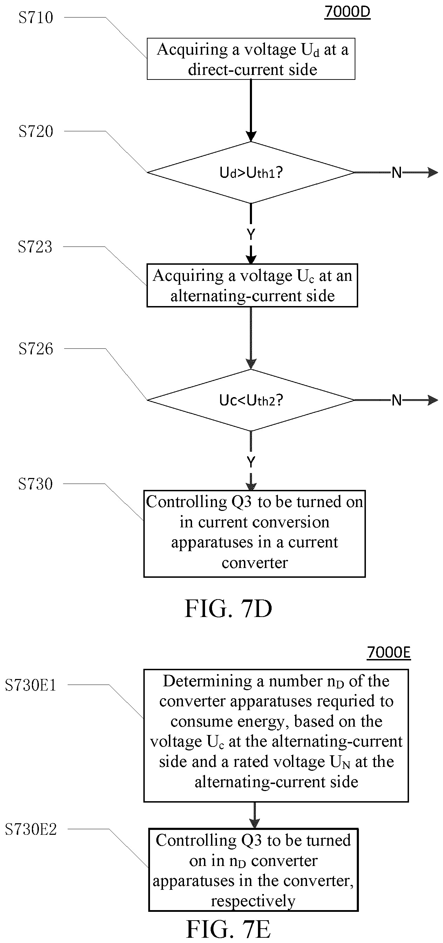

FIG. 7D shows a schematic flowchart of a method 7000D for controlling any one of the converters described above according to an embodiment of the present application. As shown in FIG. 7D, the method 7000D is obtained by adding steps S723 and S726 between the step S720 and the step S730 based on the method 7000A.

In the step S723, a voltage $U_C$ is acquired at the alternating-current side of the converter.

In the step S726, whether the voltage $U_C$ at the alternating-current side of the converter is smaller than a preset second threshold $U_{th2}$ is determined.

As shown in FIG. 7D, the step S723 may be set at any position before the step S726.

As shown in FIG. 7D, the voltage $U_C$ at the alternating-current side in the step S723 may be a mean value or a valid value of the voltage at the alternating-current side. The voltage $U_C$ at the alternating-current side may be a single-phase alternating-current voltage, or any one phase of voltage or two phases of voltages among the three-phase alternating-current voltages $U_{CA}$, $U_{CB}$ and $U_{CC}$; and the voltage $U_C$ at the alternating-current side may also be a general name of the three-phase voltages $U_{CA}$, $U_{CB}$ and $U_{CC}$. The voltage $U_C$ at the alternating-current side may be a phase voltage or a linear voltage.

As shown in FIG. 7D, the second threshold $U_{th2}$ in the step S726 may be a rated voltage $U_N$ at the alternating-current side.

FIG. 7E shows a schematic flowchart of a method 7000E for controlling any one of the converters described above according to an embodiment of the present application. As shown in FIG. 7E, the method 7000E is obtained by substituting the step S730 with steps S730E1 and 730E2 based on the method 7000D.

In the step S730E1, a number $n_D$ of the converter apparatusesrequired to consume energy, is determined based on the voltage Uc at the alternating-current side and a voltage $U_N$ at the alternating-current side, of the converter.

In the step 730E2, $n_D$ converter apparatuses in the converter are controlled to enter the energy consumption state. That is, the third controllable semiconductor device Q3 of the $n_D$ converter apparatuses are controlled to be turned on.

Further, the step S730E1 may be calculating the number $n_D$ of the converter apparatusesrequired to consume energy, according to the following formula:

$$M=C*(1-U_C/U_N)*N \qquad (4),$$

Wherein M represents the number of the converter apparatuses that need to consume energy, C represents a reliability coefficient, $U_C$ represents an alternating-current voltage, $U_N$ represents a rated alternating-current voltage, and N represents the number of the converter apparatusescomprised in the converter.

As shown in FIG. 7E, optionally, the step S720 may be: acquiring three-phase voltages $U_{CA}$, $U_{CB}$ and $U_{CC}$ at the alternating-current side of the converter. The step S730E1 may be: determining the number $n_{DA}$, $n_{DB}$ and $n_{DC}$ of the converter apparatusesrequired to consume energy at each phase, based on the three-phase voltages $U_{CA}$, $U_{CB}$ and $U_{CC}$ at the alternating-current side and the rated voltage $U_N$ at the alternating-current side. The step 730E2 may be: controlling $n_{DA}$, $n_{DB}$ and $n_{DC}$ converter apparatuses at each phase in the converter to enter the energy consumption state, respectively. That is, the third controllable semiconductor devices Q3 of the $n_{DA}$, $n_{DB}$, and $n_{DC}$ converter apparatuses at each phase are controlled to be turned on.

Further, the number $n_{DA}$, $n_{DB}$ or $n_{DC}$ of the converter apparatusesrequired to consume energy, at each phase may be calculated according to Formula (4).

When a line at the three-phase alternating-current sides is in fault, the method 7000E may be used to equalize the energy-consuming power at three phases in the converter, i.e., equally assigning the number of energy-consuming apparatuses, that have entered the energy-consumption state, among the assemblies of converter apparatuses at three phases. Furthermore, it can be ensured that the converter can output power outwards at a large output capacity.

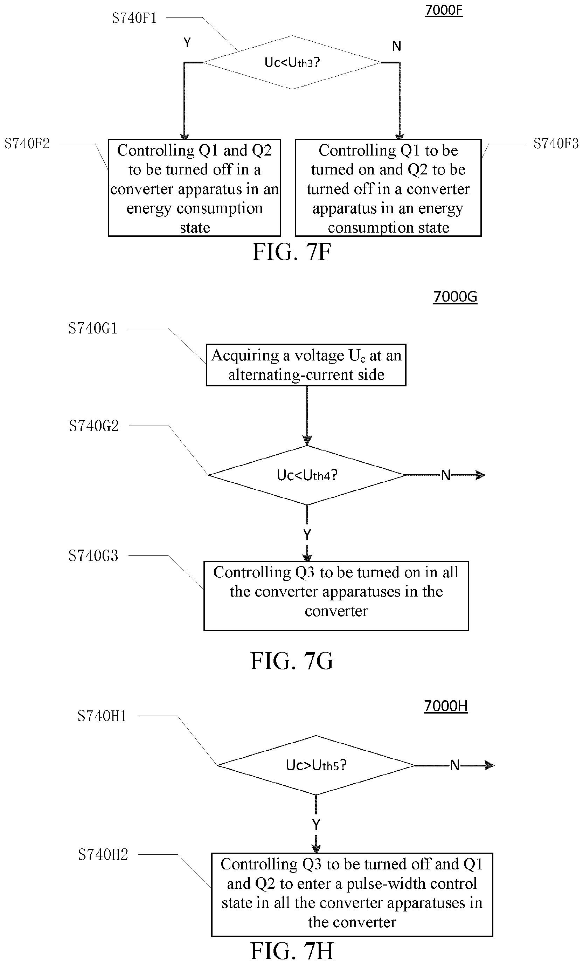

FIG. 7F shows a schematic flowchart of a method 7000F for controlling any one of the converters described above according to an embodiment of the present application. As shown in FIG. 7F, the method 7000F is obtained by adding steps S740F1, S740F2 and S740F3 based on the methods 7000C to 7000E.

In the step S740F1, whether the voltage $U_C$ at the alternating-current side is smaller than a preset third threshold $U_{th3}$ is determined.

In the step S740F2, if the voltage $U_C$ at the alternating-current side is smaller than the preset third threshold $U_{th3}$, the first and second controllable semiconductor devices Q1 and Q2 in the converter apparatuses that are in the energy consumption state are controlled to be turned off.

In the step S740F3, if the voltage $U_C$ at the alternating-current side is not smaller than the preset third threshold $U_{th3}$, the first controllable semiconductor devices Q1 in the converter apparatuses in the energy consumption state are controlled to be turned on, and the second controllable semiconductor devices Q2 are controlled to be turned off.

As shown in FIG. 7F, the method 7000F is a method for controlling the converter in the events of a minor fault and a serious fault. In the step 740F1, whether the converter is in a serous fault state is determined. In the step S740F2, when the converter is in the serous fault state, the converter apparatuses in the energy consumption state are disconnected from the connection with the outside. In the step S740F3, when the converter is in the minor fault state, inputs of the converter apparatuses are cut off, and the power that has stored in the capacitor C1 in each of the converter apparatuses is kept being output outwards.

When a fault occurs, the method 7000F may be used to control the converter to consume energy while still transmitting a part of power.

FIG. 7G shows a schematic flowchart of a method 7000G for controlling any one of the converters described above according to an embodiment of the present application. As shown in FIG. 7G, the method 7000G is obtained by adding steps S740G1, S740G2 and S740G3 based on the method 7000A.

In the step S740G1, a voltage $U_C$ is acquired at the alternating-current side of the converter.

In the step S740G2, whether the voltage $U_C$ at the alternating-current side of the converter is smaller than a fourth threshold $U_{th4}$ is determined.

In the step S740G3, if the voltage $U_C$ is smaller than the fourth threshold $U_{th4}$, the third controllable semiconductor devices Q3 are controlled to be turned on and the first and second controllable semiconductor devices Q1 and Q2 are controlled to be turned off, in all the converter apparatuses in the converter.

The method 7000G is a method for controlling the converter in the event of a catastrophic fault. In the step S740G2, whether the converter is in a catastrophic fault is determined. In the step S740G3, all the converter apparatuses in the converter are controlled to stop operating, i.e., controlling the converter to shut down.

FIG. 7H shows a schematic flowchart of a method 7000H for controlling any one of the converters described above according to an embodiment of the present application. As shown in FIG. 7H, the method 7000H is obtained by adding steps S740H1 and S740H2 based on the methods 7000C and the methods 7000D to 7000G.

In the step S740H1, whether the voltage $U_C$ at the alternating-current side of the converter is greater than a preset fifth threshold $U_{th5}$ is determined.

In the step S740H2, if the voltage $U_C$ is greater than the preset fifth threshold $U_{th5}$, the third controllable semiconductor devices Q3 in all the converter apparatuses in the converter are controlled to be turned off, and the first and second controllable semiconductor devices Q1 and Q2 are controlled to enter a pulse-width control state.

The method 7000H is a method for restoring the converter from a fault state to a normal state. In the step S740H1, whether the converter returns to normal is determined. In the step S740H2, a normal operating state is entered by quitting from the fault state.

By means of the method 7000H, the converter may quickly return to the operating state when the fault state is relieved.

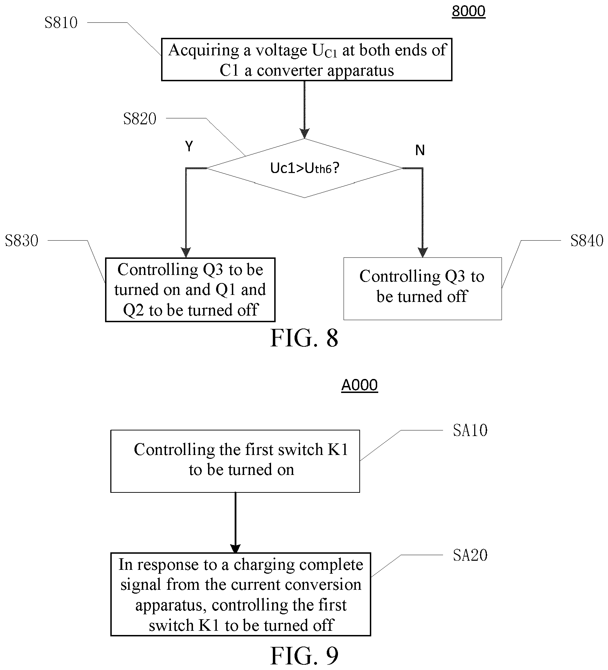

FIG. 8 shows a schematic flowchart of a method 8000 for controlling any one of the converters described above according to an embodiment of the present application. The method 8000 is a method for handing a fault of any converter apparatus described previously. As shown in FIG. 8, the method 8000 comprises: steps S810, S820, S830 and S840.

In the step S810, a voltage $U_{C1}$ at both ends of the capacitor C1 in each of the converter apparatuses in the converter is acquired.

In the step S820, whether the voltage $U_{C1}$ is greater than a preset sixth threshold $U_{th6}$ is determined.

In the step S830, if the voltage $U_{C1}$ is greater than the preset sixth threshold $U_{th6}$, the third controllable semiconductor devices Q3 in the converter apparatuses are controlled to be turned on, and the first and second controllable semiconductor devices Q1 and Q2 are controlled to be turned off.

In the step S840, if the voltage $U_{C1}$ is not greater than the preset sixth threshold $U_{th6}$, the third controllable semiconductor devices Q3 in the converter apparatuses are controlled to be turned off.

Optionally, the step S840 may further comprise: controlling the first and second controllable semiconductor devices Q1 and Q2 to return the normal operating state, which is the operating state in which the first and second controllable semiconductor devices Q1 and Q2 operate when $U_d$ is smaller than the first threshold $U_{th1}$.

The method 8000 is a protecting method with respect to the converter apparatuses in the converter.

By means of the method 8000, each of the converter apparatuses in the converter may be protected from being damaged due to over-voltage, and each of the converter apparatuses may be prevented from being out of service due to the over-voltage fault.

The present application further discloses an embodiment of a method 9000 for controlling any one of the converters described previously. The method 9000 is a method for controlling any converter described previously to stop. The method comprises the following steps.

In response to a stop instruction, the first and second controllable semiconductor devices Q1 and Q2 are controlled to be turned off and the third controllable semiconductor devices Q3 are controlled to be turned on, in all the converter apparatuses of the converter.

By means of the method 9000, a direct-current cable may be discharged quickly, a system may be stopped quickly, the capacitors inside the converter may be discharged, and a cable connected to the converter may be discharged. Therefore, the overhaul and maintenance of the system are facilitated.

FIG. 9 shows a method A000 for controlling the converter apparatus shown in FIG. 2 or FIG. 3 according to an embodiment of the present application. The method A000 is applied to a circuit consisting of a plurality of series-connected converter apparatuses as shown in FIG. 2 or FIG. 3. The method A000 is a method for controlling the charging of a capacitor/capacitors in one or more converter apparatuses in the circuit. As shown in FIG. 9, the method A000 comprises steps SA10 and SA20.

In the step SA10, the first switch K1 is controlled to be turned on.

In the step SA20, in response to a charging complete signal from the converter apparatuses in the converter, the first switch K1 is controlled to be turned off.

Optionally, a charging complete signal in the step SA20 may be a communication signal, or may be a level signal or other signals.

Further, the step SA20 may comprise: steps SA30, SA40 and SA50.

In the step SA30, a voltage $U_{C1}$ at both ends of the capacitor C1 is detected.

In the step SA40, whether $U_{C1}$ is greater than a preset seventh threshold $U_{th7}$ is determined; if so, the step SA50 is entered; and if not, the step SA30 is entered.

In the step SA50, the first switch K1 is controlled to be turned off.

By means of the method described above, for a circuit consisting of a plurality of series-connected converter apparatuses shown in FIG. 2 or FIG. 3, when a capacitor/capacitors in one or more converter apparatuses therein is/are changed, the first control may be controlled to equalize the voltage by using the series-connected first resistor and second resistor during the process of charging the capacitor(s) in the converter apparatuses. After the charging is complete, the first switch is controlled for disconnection, such that the loss of this/these converter apparatuses may be reduced.

By means of any method described above, the on and off of the third controllable semiconductor devices in the converter apparatuses in the converter described previously may be controlled such that the first and second resistors may take account of the voltage equalizing between the modules in the event of energy consumption and series application. Therefore, the sizes of the converter apparatuses may be smaller. Meanwhile, since the converter is in a normal operating state in most of the time, that is, the converter apparatuses are in a voltage-equalizing state in most of the time, the utilization rate of devices is high by putting both the first and second resistors into use.

At the same time, by controlling any converter described previously by means of any method described above, the devices in the converter can be effectively protected from damages, and the operating safety of the converter in a power grid can be protected.

In the embodiments described above, the descriptions of the embodiments are emphasized differently, and for parts that are not described in detail in an embodiment, a reference may be made to the related descriptions in other embodiments. The technical features of the embodiments described above may be combined arbitrarily. For the conciseness of the description, the possible combinations of all the technical features in the embodiments described above are not completely described. However, the combinations of these technical features shall be considered as falling within the scope stated in the specification as long as these combinations do not contradict each other.

The embodiments of the present application are described in detail above. The specific examples are used herein to set forth the principle and embodiments of the present application. The descriptions of the embodiments above are merely for the purpose of helping understand the methods and their core concepts of the present application. Meanwhile, alternations or variations made by those skilled in the art in accordance with the concept of the present application and based on the specific embodiments and application scope of the present application shall fall within the protection scope of the present application. In summary, the content of the specification should not be understood as a limitation on the present application.

**Claims**

1. A converter apparatus, comprising:

   a switch unit, comprising a first controllable semiconductor device and a second controllable semiconductor device connected in series;
   a capacitor connected with the switch unit in parallel; and
   an energy-consuming voltage-equalizing unit connected with the capacitor in parallel, and comprising a first resistor, a second resistor and a third controllable semiconductor device, wherein the first resistor and the second resistor are connected in series, and the third controllable semiconductor device is connected with the first resistor in parallel.

2. The converter apparatus according to Claim 1, wherein the energy-consuming voltage-equalizing unit further comprises:
   a first switch connected with the first resistor in series, wherein the third controllable semiconductor device is connected with the first resistor and the first switch in parallel.

3. The converter apparatus according to Claim 1, wherein the second controllable semiconductor device is a unipolar transistor; and
   the converter apparatus further comprises: two wiring terminals electrically connected to a source and a drain of the second controllable semiconductor device, respectively.

4. The converter apparatus according to Claim 1, wherein the second controllable semiconductor device is a bipolar transistor; and
   the converter apparatus further comprises: two wiring terminals electrically connected to a collector and an emitter of the second controllable semiconductor device, respectively.

5. The converter apparatus according to Claim 1, wherein the switch unit further comprises:
a fourth controllable semiconductor device and a fifth controllable semiconductor device connected in series, wherein the first controllable semiconductor device and the second controllable semiconductor device are mutually connected with the fourth controllable semiconductor device and the fifth controllable semiconductor device in parallel.

6. The converter apparatus according to Claim 5, further comprising:
two wiring terminals connected between the first controllable semiconductor device and the second controllable semiconductor device and between the fourth controllable semiconductor device and the fifth controllable semiconductor device, respectively.

7. The converter apparatus according to Claim 1, further comprising:
a second switch connected across the two wiring terminals.

8. The converter apparatus according to Claim 1, further comprising:
a free-wheel diode connected with the second resistor in anti-parallel.

9. The converter apparatus according to Claim 1, wherein a resistance value of the first resistor is greater than a resistance value of the second resistor.

10. An assembly of converter apparatuses, comprising at least two converter apparatuses of any one of Claims 1 to 9, connected in series.

11. A reactive power compensation apparatus, comprising:
the assembly of converter apparatuses of Claim 10, electrically connected to a circuit to be compensated.

12. A converter, comprising:
the assembly of converter apparatuses of Claim 10, both ends thereof being at a direct-current side and electrically connected to both ends of a direct-current line respectively, wherein an alternating-current side is predetermined to be between two of the converter apparatuses in the assembly of converter apparatuses, and is electrically connected to an alternating-current line.

13. The converter according to Claim 12, comprising three assemblies of converter apparatuses, wherein the alternating-current side is electrically connected to three-phase lines in a three-phase alternating-current circuit, respectively.

14. A method for controlling the converter of Claim 12 or 13, comprising:

acquiring a voltage at the direct-current side of the converter;
determining whether the voltage at the direct-current side is greater than a preset first threshold; and
controlling the third controllable semiconductor devices to be turned on in at least some of the converter apparatuses in the converter, based on a determining result.

15. The method according to Claim 14, wherein controlling the third controllable semiconductor devices to be turned on in the at least some of the converter apparatuses in the converter, based on the judgment result, comprises:

determining transmission power at the alternating-current side based on a voltage and a current at the alternating-current side of the converter;
calculating a difference by which the transmission power at the alternating-current side is lower than a preset transmission power value of the converter;
determining a number of the converter apparatuses required to consume energy, based on the difference; and
controlling the third controllable semiconductor devices to be turned on in the determined number of the converter apparatuses in the converter.

16. The method according to Claim 15, wherein controlling the third controllable semiconductor devices to be turned on in the determined number of the converter apparatuses in the converter comprises:

acquiring a voltage at each alternating-current side of each phase in the converter;
assigning a number of the converter apparatuses required to consume energy at each phase in proportion, based on the voltages at three-phase alternating-current sides and the determined number; and

controlling the third controllable semiconductor devices, in the assigned number in proportion of converter apparatuses at each phase of the converter, to be turned on.

17. The method according to Claim 14, further comprising:

acquiring a voltage at the alternating-current side of the converter; and
determining whether the voltage at the alternating-current side is smaller than a preset second threshold.

18. The method according to Claim 17, wherein controlling the third controllable semiconductor devices to be turned on in the at least some of the converter apparatuses in the converter, based on the judgment result, comprises:

determining a number of the converter apparatuses required to consume energy based on the voltage at the alternating-current side and a rated voltage of the alternating-current side of the converter, wherein the number is negatively correlated with the voltage at the alternating-current side; and
controlling the third controllable semiconductor devices to be turned on in the determined number of the converter apparatuses in the converter.

19. The method according to Claim 18, wherein the number of the converter apparatuses required to consume energy is determined according to the following formula:

$$M=C*(1-Uac/Un)*N,$$

wherein M represents the number of the converter apparatuses required to consume energy, C represents a reliability coefficient, Uac represents the voltage at the alternating-current side of the converter, Un represents the rated voltage at the alternating-current side of the converter, and N represents the number of the converter apparatuses comprised in the converter.

20. The method according to any one of Claims 14 to 19, further comprising:
controlling the first controllable semiconductor devices to be turned on and the second controllable semiconductor devices to be turned off, in the converter apparatuses where the third controllable semiconductor devices are turned on in the converter.

21. The method according to any one of Claims 16 to 19, further comprising:

determining whether the voltage at the alternating-current side is smaller than a preset third threshold;
if so, controlling the first and second controllable semiconductor devices to be turned off in the converter apparatuses, where the third controllable semiconductor devices are turned on, in the converter; and
if not, controlling the first controllable semiconductor devices to be turned on and the second controllable semiconductor devices to be turned off in the converter apparatuses, where the third controllable semiconductor devices are turned on, in the converter.

22. The method according to Claim 14, further comprising:

acquiring a voltage at the alternating-current side of the converter;
determining whether the voltage at the alternating-current side is smaller than a preset fourth threshold, and
if so, controlling the third controllable semiconductor devices to be turned on and the first and second controllable semiconductor devices to be turned off in all the converter apparatuses in the converter.

23. The method according to Claim 22, further comprising:
controlling the first and second controllable semiconductor devices to be turned off in all the converter apparatuses in the converter.

24. The method according to Claim 16 or 17, further comprising:

determining whether the voltage at the alternating-current side is greater than a preset fifth threshold; and
if so, controlling, in all the converter apparatuses in the converter, the third controllable semiconductor devices to be turned off and the first and second controllable semiconductor devices to return to an operating strategy before the voltage at the direct-current side exceeds the first threshold.

25. A method for controlling the converter of Claim 12 or 13, comprising:

acquiring a voltage at both ends of the capacitor in each of the converter apparatuses;
determining whether the voltage at both ends of the capacitor is greater than a preset sixth threshold;
if so, controlling the third controllable semiconductor devices to be turned on and the first and second controllable semiconductor devices to be turned off in the converter apparatuses; and
if not, controlling the third controllable semiconductor devices to be turned off in the converter apparatuses.

26. A method for controlling the converter of Claim 12 or 13, comprising:
controlling the first and second controllable semiconductor devices to be turned off and the third controllable semiconductor devices to be turned on in the converter apparatuses of the converter, in response to a stop instruction from the converter.

27. A method for controlling the converter apparatus of Claim 2, comprising:

controlling the first switch to be turned on; and
controlling the first switch to be turned off, in response to a charging complete signal from the capacitor.

28. The method according to Claim 27, wherein controlling the first switch to be turned off, in response to the charging complete signal from the capacitor, comprises:

detecting a voltage at both ends of the capacitor;
comparing the voltage at both ends of the capacitor with a preset seventh threshold; and
determining whether the capacitor completes charging based on a comparison result.

FIG. 1

FIG. 2

FIG. 3

4000

P1

P2

P3

FIG. 4

5000

a

b

c

T1        T2        T3

FIG. 5

6000

LP

a
b
c

LN

T601    T602    T603

## FIG. 6

7000A

S710 — Acquiring a voltage $U_d$ at a direct-current side

S720 — $U_d > U_{th1}$?    N

Y

S730 — Controlling Q3 to be turned on in converter apparatuses in a converter

## FIG. 7A

7000B

S710 — Acquiring a voltage $U_d$ at a direct-current side

S720 — $U_d > U_{th1}$? — N →

Y

S730B1 — Acquiring transmission power P at the direct-current side

S730B2 — $\Delta P = P_0 - P$

S730B3 — Determining a number n based on $\Delta P$

S730B4 — Controlling Q3 to be turned on in n converter apparatuses in a converter

FIG. 7B

7000C

S730C1

Acquiring voltages $U_{CA}$, $U_{CB}$ and $U_{CC}$ at three-phase alternating-current sides

S730C2

Determining a number $n_{BA}$, $n_{BB}$ or $n_{BC}$ of the converter apparatuses requried to consume energy, at each phase in the converter based on $U_{CA}$, $U_{CB}$, $U_{CC}$, and n

S730C3

Controlling Q3 to be turned on respectively in $n_{BA}$, $n_{BB}$ or $n_{BC}$ converter apparatuses at each phase in the converter

FIG. 7C

7000D

S710 — Acquiring a voltage $U_d$ at a direct-current side

S720 — $U_d > U_{th1}$? —N→

Y

S723 — Acquiring a voltage $U_c$ at an alternating-current side

S726 — $U_c < U_{th2}$? —N→

Y

S730 — Controlling Q3 to be turned on in current conversion apparatuses in a current converter

FIG. 7D

7000E

S730E1 — Determining a number $n_D$ of the converter apparatuses requried to consume energy, based on the voltage $U_c$ at the alternating-current side and a rated voltage $U_N$ at the alternating-current side

S730E2 — Controlling Q3 to be turned on in $n_D$ converter apparatuses in the converter, respectively

FIG. 7E

7000F

S740F1

Y                                                                N

Uc<Uth3?

S740F2 — Controlling Q1 and Q2
to be turned off in a
converter apparatus in an
energy consumption
state

Controlling Q1 to be
turned on and Q2 to be
turned off in a converter
apparatus in an energy
consumption state — S740F3

FIG. 7F

7000G

S740G1 — Acquiring a voltage $U_c$ at an
alternating-current side

S740G2 — Uc<Uth4? — N→

Y

S740G3 — Controlling Q3 to be turned on in all
the converter apparatuses in the
converter

FIG. 7G

7000H

S740H1 — Uc>Uth5? — N→

Y

S740H2 — Controlling Q3 to be turned off and Q1
and Q2 to enter a pulse-width control
state in all the converter apparatuses in
the converter

FIG. 7H

8000

S810 — Acquiring a voltage $U_{C1}$ at both ends of C1 a converter apparatus

S820 — $U_{C1}>U_{th6}$?

Y     N

S830 — Controlling Q3 to be turned on and Q1 and Q2 to be turned off

S840 — Controlling Q3 to be turned off

FIG. 8

A000

Controlling the first switch K1 to be turned on — SA10

In response to a charging complete signal from the current conversion apparatus, controlling the first switch K1 to be turned off — SA20

FIG. 9

<div align="center">**INTERNATIONAL SEARCH REPORT**</div>

| International application No. |
|---|
| **PCT/CN2020/099402** |

| A. | CLASSIFICATION OF SUBJECT MATTER |
|---|---|

H02M 1/32(2007.01)i

According to International Patent Classification (IPC) or to both national classification and IPC

| B. | FIELDS SEARCHED |
|---|---|

Minimum documentation searched (classification system followed by classification symbols)

H02M; H02J; H02H

Documentation searched other than minimum documentation to the extent that such documents are included in the fields searched

Electronic data base consulted during the international search (name of data base and, where practicable, search terms used)

CNPAT, CNKI, EPODOC, WPI: 换流装置, 换流器, 换流阀, 直流输电, 故障, 耗能, 泄能, 消耗能量, 泄放能量, 均压, 投入, 数量, 功率, converter, VSC, MMC, fault, dissipater, energy consumption, voltage equalization, number, power

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 202749815 U (WUXI QINGYUAN ELECTRICAL SCIENCE & TECHNOLOGY CO., LTD.) 20 February 2013 (2013-02-20) description, paragraphs [0032]-[0058], and figures 1-4 | 1-28 |
| Y | CN 205509501 U (NR ELECTRIC CO., LTD. et al.) 24 August 2016 (2016-08-24) description paragraphs [0026]-[0088], figure 3 | 1-28 |
| Y | CN 108376993 A (MAINTENANCE BRANCH OF STATE GRID JIBEI ELECTRIC POWER COMPANY LIMITED et al.) 07 August 2018 (2018-08-07) description paragraphs [0034]-[0053], figure 3 | 15-16 |
| A | CN 109861269 A (XI'AN XJ POWER ELECTRONICS TECHNOLOGY CO., LTD.) 07 June 2019 (2019-06-07) entire document | 1-28 |
| A | CN 106374767 A (STATE GRID FUJIAN ELECTRIC POWER CO., LTD. et al.) 01 February 2017 (2017-02-01) entire document | 1-28 |
| A | CN 108666995 A (STATE GRID CORPORATION OF CHINA et al.) 16 October 2018 (2018-10-16) entire document | 1-28 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 September 2020** | **29 September 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**EP 3 890 174 A1**

INTERNATIONAL SEARCH REPORT

International application No.

**PCT/CN2020/099402**

**C.    DOCUMENTS CONSIDERED TO BE RELEVANT**

| Category* | Citation of document, with indication, where appropriate, of the relevant passages | Relevant to claim No. |
|---|---|---|
| A | US 2017214335 A1 (GE ENERGY POWER CONVERSION TECHNOLOGY LTD) 27 July 2017 (2017-07-27) entire document | 1-28 |

Form PCT/ISA/210 (second sheet) (January 2015)

24

**INTERNATIONAL SEARCH REPORT**
Information on patent family members

International application No.

**PCT/CN2020/099402**

| Patent document cited in search report | | | Publication date (day/month/year) | Patent family member(s) | | | Publication date (day/month/year) |
|---|---|---|---|---|---|---|---|
| CN | 202749815 | U | 20 February 2013 | None | | | |
| CN | 205509501 | U | 24 August 2016 | None | | | |
| CN | 108376993 | A | 07 August 2018 | None | | | |
| CN | 109861269 | A | 07 June 2019 | None | | | |
| CN | 106374767 | A | 01 February 2017 | CN | 106374767 | B | 04 December 2018 |
| CN | 108666995 | A | 16 October 2018 | None | | | |
| US | 2017214335 | A1 | 27 July 2017 | US | 10090776 | B2 | 02 October 2018 |
| | | | | EP | 3200331 | A1 | 02 August 2017 |
| | | | | CN | 107017763 | B | 13 August 2019 |
| | | | | CN | 107017763 | A | 04 August 2017 |
| | | | | EP | 3200331 | B1 | 20 November 2019 |

Form PCT/ISA/210 (patent family annex) (January 2015)